(19) Europäisches Patentamt / European Patent Office / Office européen des brevets

(11) **EP 2 943 737 B1**

(12) **FASCICULE DE BREVET EUROPEEN**

(45) Date de publication et mention
de la délivrance du brevet:
**14.12.2016 Bulletin 2016/50**

(21) Numéro de dépôt: **14700243.0**

(22) Date de dépôt: **08.01.2014**

(51) Int Cl.:
*F41G 7/00* (2006.01)     *F41G 7/22* (2006.01)
*G01S 3/78* (2006.01)     *G01S 3/784* (2006.01)
*H04N 5/33* (2006.01)     *H04N 5/365* (2011.01)
*F42B 15/34* (2006.01)     *F42B 10/46* (2006.01)

(86) Numéro de dépôt international:
**PCT/EP2014/050187**

(87) Numéro de publication internationale:
**WO 2014/108421 (17.07.2014 Gazette 2014/29)**

(54) **POINTE AVANT D'AERONEF AVEC DISPOSITIF DE CALIBRATION D'UN DETECTEUR IR ET PROCEDE DE CALIBRATION**

FLUGZEUGNASENKONUS MIT EINER VORRICHTUNG ZUR KALIBRIERUNG EINES IR-DETEKTORS UND KALIBRIERVERFAHREN

AIRCRAFT NOSE CONE WITH A DEVICE FOR CALIBRATING AN IR DETECTOR AND CALIBRATION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.01.2013 FR 1300034**

(43) Date de publication de la demande:
**18.11.2015 Bulletin 2015/47**

(73) Titulaire: **THALES
92400 Courbevoie (FR)**

(72) Inventeurs:
• **RIVIERE, Philippe
F-69160 Tassin-la-Demi-Lune (FR)**

• **GIRARD, Olivier
F-78960 Voisin le Bretonneux (FR)**

(74) Mandataire: **Henriot, Marie-Pierre
Marks & Clerk France
Conseils en Propriété Industrielle
Immeuble Visium
22, Avenue Aristide Briand
94117 Arcueil Cedex (FR)**

(56) Documents cités:
**WO-A1-01/15435     US-A- 6 127 679
US-A1- 2003 183 756     US-A1- 2009 250 614**

**Description**

Le domaine de l'invention est celui de la calibration d'un détecteur matriciel infra-rouge embarqué dans un auto-directeur situé dans la pointe avant d'un aéronef, notamment lorsque celui-ci est soumis à des variations thermiques importantes. On peut citer comme exemple d'aéronef, les fusées, missiles, etc.

La calibration a pour but de compenser les variations des signaux issus de chaque pixel du détecteur, dues principalement à :

- la différence de dimension de chaque pixel, due aux tolérances de fabrication du détecteur de l'ordre du micron,
- la différence de sensibilité pixel à pixel dans la longueur d'onde considérée,
- la différence d'angle de vue entre pixels,
- la température de l'interface externe de l'autodirecteur (fenêtre ou dôme)
- etc.

Ces variations de signaux créent dans l'image une forme parasite appelée « Fixed Pattern Noise » (FPN), qui diminue la capacité de détection dans l'image. Ce FPN est:

- dépendant des conditions de température des composants optiques de l'autodirecteur,
- spécifique à chaque détecteur,
- dépendant du temps d'intégration qui sera appliqué au détecteur pendant la mission,
- différent à chacune des mises sous tension.

Pour corriger ces variations de signaux, des coefficients dédiés à chaque pixel sont établis pour un temps d'intégration donné, en égalisant les signaux de sorties de chacun des pixels lorsque le détecteur et ses optiques font face à une source de température uniforme. La température uniforme de la source, utilisée pour cette opération dite de « calibration », est le plus possible représentative de la scène opérationnelle (hors cible ou satellite). Lorsque l'aéronef évolue à très haute altitude et grande vitesse, hors atmosphère par exemple pour un aéronef tel qu'une fusée, la scène a une température équivalente proche du zéro absolu. Lorsque l'aéronef évolue à basse altitude et faible vitesse, la scène a la température du sol.

Plus précisément les coefficients de chaque pixel de l'image issue du détecteur sont calculés de la manière suivante. Le détecteur collecte une image de la source à température uniforme préalablement réglée à une première température de calibration. L'image acquise n'est pas uniforme du fait du FPN. L'écart par rapport à la valeur moyenne de l'image collectée est déterminé pour chaque pixel.

Le même procédé est effectué pour une deuxième température de calibration. Les 2 écarts mesurés pour chaque pixel permettent de définir 2 coefficients appelés Gain et Offset. Lors de l'utilisation opérationnelle, la valeur de sortie brute de chaque pixel sera modifiée comme suit :

$$Pixel\ corrigé = Offset_{(ti)} + Gain_{(ti)} * pixel\ brut$$

où

*ti : représente le temps d'intégration*

Les 2 valeurs de température du dispositif de calibration auxquelles sont mesurés les coefficients, doivent être telles que le flux reçu par le détecteur à ces 2 valeurs soit proche de celui qui sera reçu par celui-ci en phase opérationnelle. Pour une calibration optimale, 2 valeurs doivent être disponibles : la première valeur étant légèrement inférieure à la température estimée de la scène, la seconde légèrement supérieure.

Le gain et l'offset sont fonction du temps d'intégration. Par conséquent, ces opérations doivent être répétées pour chaque temps d'intégration envisagé pour la phase opérationnelle de la mission.

De manière classique, la scène à température uniforme est créée en utilisant un « corps noir » situé dans l'autodirecteur lorsque le volume interne de celui-ci le permet, comme divulgué dans le document US 2009/0250614 A1, et comme illustré figures 1 a et 1b.

Est représentée sur ces figures une pointe avant 100 d'aéronef équipée d'un autodirecteur 20 et d'une coiffe 10 qui est éjectée lorsque l'autodirecteur est opérationnel. Cette coiffe éjectable isole thermiquement l'autodirecteur de l'échauffement qui serait provoqué par la traversée des basses couches de l'atmosphère. Toutefois, cette isolation thermique n'est pas totale et il existe un échauffement résiduel à l'intérieur de la coiffe. Cet autodirecteur 20 comporte :

- un dôme (ou fenêtre) 21,

- un détecteur IR 22 dans la bande 3 $\mu$m-12 $\mu$m et
- une optique 24 apte à former une image d'une scène sur le détecteur IR placé dans le plan focal 23 de l'optique 24 ; l'ensemble détecteur-optique de formation d'images de la scène (22,24) est monté sur un dispositif de rotation (simplement représenté par une flèche 26), apte à faire pivoter cet ensemble à 180° ;
- un dispositif de calibration 25 muni d'un corps noir 251 dont la température est ajustée par effet Peltier, et d'une optique 253 apte à diriger le rayonnement émis par le corps noir, dispositif situé derrière le détecteur 22 (par rapport à la scène).

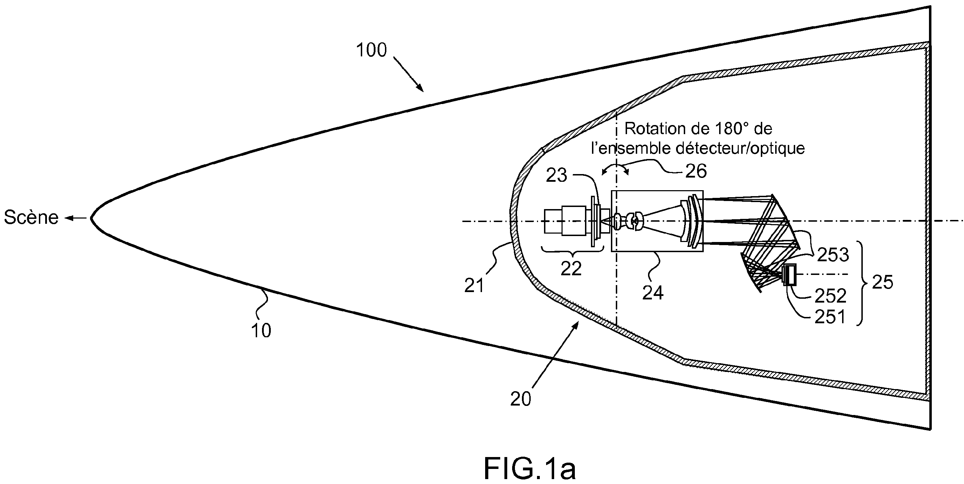

En phase de calibration montrée figure 1a, cet ensemble détecteur-optique 22,24 est dirigé au moyen du dispositif de rotation, de manière à former l'image du corps noir 251 sur le détecteur 22 : cet ensemble détecteur-optique « tourne le dos » à la scène en quelque sorte. Le calcul des gain et offset est effectué à partir de cette image du corps noir. La température du corps noir est représentative de la température de scène à laquelle on ajoute la température estimée pour la contribution du dôme.

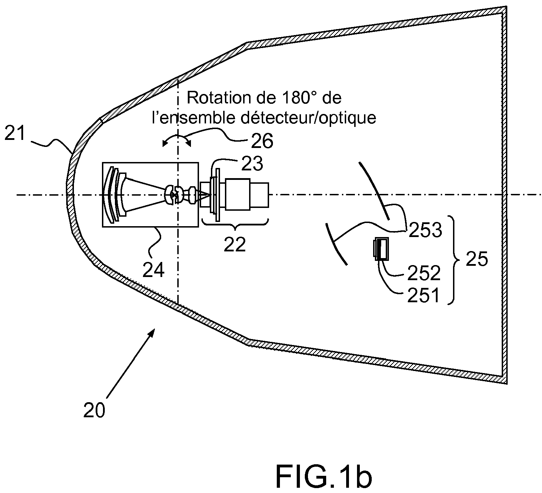

Puis la calibration étant réalisée, cet ensemble est pivoté de 180° de manière à former l'image de la scène sur le détecteur et la coiffe 10 est éjectée comme montré figure 1 b.

L'utilisation d'un corps noir permet d'ajuster la valeur de température de calibration et d'avoir une excellente uniformité de la température de calibration. Mais elle a comme défauts principaux :

- la perte de volume occasionnée par le dispositif de calibration, sachant que le volume disponible dans l'autodirecteur est très réduit et que par conséquent, le volume utilisé par la fonction calibration est une « perte » en utilisation opérationnelle,
- une dynamique de température limitée notamment dans les basses températures qui peuvent être requises compte tenu de la température de scène.
- une variation de température peu rapide,
- des incertitudes sur les estimations des températures émises par la fenêtre ou le dôme sur le détecteur, nécessaires pour déterminer la température du corps noir, sachant que la température de cette fenêtre ou dôme a, avec celle de l'optique du détecteur, une contribution significative sur le FPN.

Une autre technique pour obtenir une scène à température uniforme consiste à moyenner un nombre important d'images collectées aléatoirement dans la scène. Ce faisant, on estime que tous les pixels de l'image ont « vu » une moyenne de signal identique et que le résidu de non-uniformité provient du FPN à corriger. Cette technique évite le problème de perte de volume mais ne permet pas d'obtenir l'équivalent d'une source très uniforme, sauf à accumuler un nombre très important d'images ce qui augmente la durée de calibration. Ce type de calibration n'est pas adapté pour des aéronefs dont le temps de calibration est très court (typiquement inférieur à 15 secondes) et/ou lorsque la scène possède des points brillants (difficilement moyennables). De plus, une seule valeur de température pour la calibration est disponible dans ce cas.

Le but de l'invention est de pallier ces inconvénients. En conséquence, il demeure à ce jour un besoin pour une calibration de détecteur notamment dans le cas d'une température de scène très faible lorsque l'équipement est soumis à de forts écarts thermiques.

La solution apportée est basée sur une référence de température telle qu'un corps noir, située en dehors de l'autodirecteur, permettant d'avoir les avantages des 2 solutions antérieures sans leurs inconvénients.

Plus précisément l'invention a pour objet une pointe avant d'aéronef munie d'une coiffe éjectable dans laquelle sont situés :

- un autodirecteur équipé d'un détecteur IR, d'un dôme et d'une optique apte à former une image d'une scène sur le détecteur IR placé dans le plan focal de l'optique,
- un dispositif de calibration équipé d'une référence de température et d'une optique apte à diriger le rayonnement émis par la référence de température.

Elle est principalement caractérisée en ce que le dispositif de calibration est placé en dehors de l'autodirecteur, en amont de celui-ci de manière à ce que l'optique de calibration soit apte à former une image de la référence de température sur le détecteur à travers le dôme et l'optique de l'autodirecteur, et en ce que ce dispositif de calibration est éjectable avec la coiffe.

Cette pointe avant permet de satisfaire sans perte de volume utile (interne à l'autodirecteur) nombre d'exigences telles que :

- temps de calibration réduit,
- qualité d'uniformité de la référence de température (corps noir),

- calibration incluant le dôme,
- calibration à partir de deux valeurs de températures.

Selon une caractéristique de l'invention, le dispositif de calibration comporte en outre un cryostat dans lequel est située la référence de température et comprenant un refroidisseur apte à porter la température de la référence à une température prédéterminée.

De préférence, le refroidisseur est à circuit ouvert et associé à un réservoir de gaz pressurisé.

La température prédéterminée de la référence est par exemple comprise entre 100 K et 200 K.

L'utilisation d'un cryostat comme encapsulation du corps noir permet :

- d'éviter tous phénomènes de condensation aux températures faibles,
- de faire varier la température rapidement par l'utilisation d'un refroidisseur de type Joule-Thomson associé à un réservoir de volume limite.

L'ensemble optique et détecteur de l'autodirecteur est généralement monté sur un dispositif de rotation ayant une amplitude de rotation inférieure à 90°.

L'aéronef est typiquement une fusée ou un missile.

L'invention a aussi pour objet un procédé de calibration du détecteur de l'autodirecteur d'une pointe avant d'aéronef telle que précédemment décrite et dont la référence de température est un corps noir, caractérisé en ce qu'une image comportant des pixels, et le détecteur comportant au moins un temps d'intégration ti, il comprend les étapes suivantes de :

- calcul d'un offset et d'un gain pour chaque pixel pour un temps d'intégration $t_i$ du détecteur, à partir d'une image du corps noir à une première température T1 °, puis d'une image à une deuxième température T2°. Ces images étant formées sur le détecteur à travers le dôme et l'optique de l'autodirecteur les températures T1 ° et T2° dépendent uniquement du temps d'intégration ti et non d'une température estimée du dôme,
- mise en mémoire de l'offset et du gain calculés,
- lorsqu'il y a plusieurs temps d'intégration, réitération de ces étapes de calcul et de mise en mémoire d'un offset et d'un gain pour chaque autre temps d'intégration $t_i$ du détecteur avec des températures T1 ° et T2° différentes,
- éjection du dispositif de calibration.

Lorsqu'il y a plusieurs temps d'intégration, la deuxième température utilisée pour le temps d'intégration précédent, est avantageusement celle de la première température du temps d'intégration suivant.

Cette calibration est effectuée une seule fois en début de mission dans les conditions de fonctionnement de l'autodirecteur c'est-à-dire pour différents temps d'intégration, en incluant tout le système optique (dont le dôme) de manière à ne pas avoir à modifier la température de référence en fonction de la contribution des parties optiques et avec la possibilité de présenter à l'autodirecteur deux températures de références encadrant la température de scène.

D'autres caractéristiques et avantages de l'invention apparaîtront à la lecture de la description détaillée qui suit, faite à titre d'exemple non limitatif et en référence aux dessins annexés dans lesquels :

les figures 1 déjà décrites représentent schématiquement un exemple de pointe avant équipée d'un détecteur IR et d'un dispositif de calibration de ce détecteur, en phase de calibration (fig 1a) et en phase opérationnelle après décoiffage (fig 1 b), selon l'état de la technique,

les figures 2 représentent schématiquement un exemple de pointe avant équipée d'un détecteur IR et d'un dispositif de calibration de ce détecteur, en phase de calibration (fig 2a) et en phase opérationnelle après décoiffage (fig 2b), selon l'invention.

D'une figure à l'autre, les mêmes éléments sont repérés par les mêmes références.

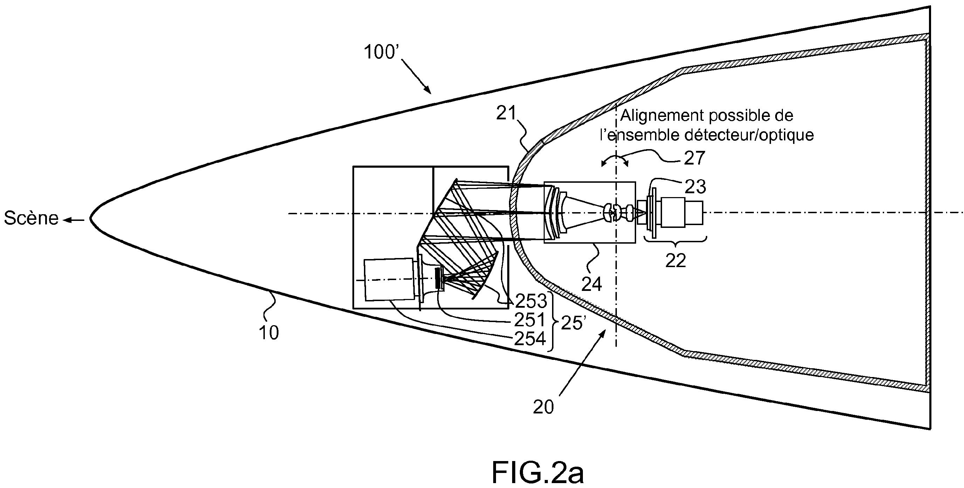

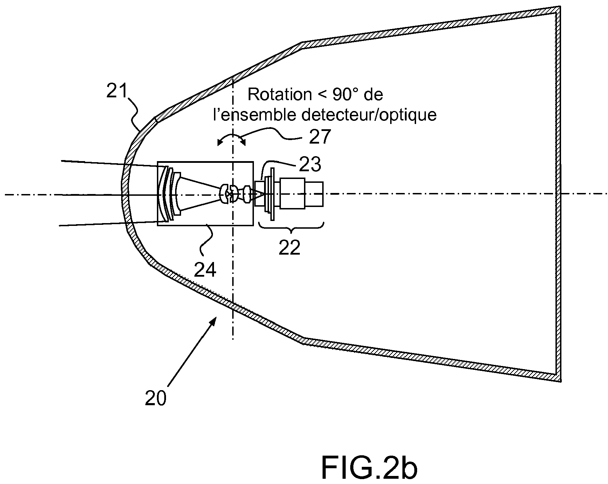

On décrit en relation avec les figures 2 un exemple de pointe avant 100' selon l'invention.

Comme dans l'exemple du préambule, elle est équipée d'un autodirecteur 20 et d'une coiffe éjectable 10 nécessaire pour protéger l'autodirecteur notamment de l'échauffement provoqué par la traversée des basses couches de l'atmosphère, et qui est éjectée lorsque l'autodirecteur est opérationnel. Ce dernier comporte :

- un dôme 21,
- un détecteur IR 22 et
- une optique 24 apte à former une image d'une scène sur le détecteur IR placé dans le plan focal 23 de l'optique 24.

Selon l'invention, le dispositif de calibration 25' est muni d'une référence de température qui peut être un corps noir 251 ou simplement un miroir apte à renvoyer sur le détecteur l'image de celui-ci (effet Narcisse). Dans le cas de l'utilisation d'un simple miroir, la température de référence est unique et égale à celle du détecteur de l'autodirecteur donc sans relation directe avec la température de scène. Ce dispositif de calibration est bien situé dans la coiffe éjectable 10 et fixé à celle-ci, mais il est à l'extérieur de l'autodirecteur 20, en amont de celui-ci (le sens amont-aval est celui des rayons issus de la scène et atteignant le détecteur) de manière à ce que l'image de la référence de température sur le détecteur soit formée à travers le dôme et l'optique de l'autodirecteur.

Cela permet ainsi :

- de préserver l'encombrement interne de l'autodirecteur pour les parties fonctionnelles de celui-ci,
- de réaliser la calibration en prenant en compte tout le trajet optique, dôme de l'autodirecteur compris,
- de pouvoir fournir plusieurs températures de calibration proches de celles de la scène et prenant en compte les températures réelles (et non estimées) du dôme,
- d'avoir une correction correspondant à l'état exact du détecteur à l'instant de son emploi par rapport à une calibration antérieure effectuée en usine par exemple, et dont les valeurs ont pu dériver.

Le dispositif de calibration 25' est équipé d'une optique de focalisation ne comportant de préférence que des miroirs 253 ; cette optique permet d'utiliser une surface de référence de température, de dimension réduite. On peut typiquement utiliser une surface d'environ 10 mm de diamètre, qui formera sur le dôme un faisceau d'environ 40 mm de diamètre.

Comme la température de référence est représentative de la scène uniquement, la température requise pour la référence de température est plus froide que dans l'état de l'art. De manière à éviter toute condensation sur cette référence de température 251, celle-ci est avantageusement située sur un plan froid au sein de l'enceinte sous vide d'un cryostat 254. Dans le cas simple d'un miroir comme référence de température, le dispositif de calibration ne comporte pas de cryostat. Un capteur de température à proximité de la référence de température permet au système de connaître l'instant où il faut collecter les images de la référence de température.

La mise en température de la référence de température s'effectue au moyen d'un refroidisseur à circuit ouvert (de type Joule-Thomson) associé à un réservoir de gaz tel que Argon ou Azote sous forte pression, inclus dans le cryostat, de façon à minimiser le temps de mise en froid et ainsi atteindre rapidement les basses températures de calibration, contrairement à un corps noir basé sur des effets Peltier à refroidissement plus long et limité dans la partie basse de la gamme de températures. Le volume du réservoir peut être réduit car la durée de la calibration et donc de celle de son fonctionnement est courte.

L'ensemble détecteur 22 avec son optique associée 24 est de préférence également monté sur un dispositif de rotation (représenté par la flèche 27) utilisé en cas de poursuite de cible par l'autodirecteur en phase opérationnelle et éventuellement en phase de calibration pour aligner le dispositif de calibration avec l'optique de l'autodirecteur et le détecteur. Mais alors, une amplitude de rotation inférieure à 90° suffit en phase opérationnelle, et inférieure à 10° suffit en phase de calibration. Il n'est plus nécessaire de retourner à 180° cet ensemble entre les deux phases.

Une liaison électrique (non représentée sur les figures) permet le transfert des informations entre l'autodirecteur et le dispositif de calibration. Les informations échangées sont au minimum la température du dispositif et la température de consigne. Cette liaison est bien sûr coupée lors de l'éjection du dispositif de calibration.

On va à présent décrire un exemple de procédé de calibration du détecteur d'une pointe avant 100' telle que décrite et dont la référence de température est un corps noir. Cela consiste principalement à calculer les corrections à apporter à chaque pixel de l'image de la scène. Comme indiqué en préambule, des coefficients de correction (aussi appelés coefficients de calibration) sont calculés pour chaque pixel d'une image du corps noir. Le gain et l'offset sont fonction du temps d'intégration du détecteur. Par conséquent, ces opérations doivent être répétées pour chaque temps d'intégration ti envisagé pour la phase opérationnelle de la mission.

Le procédé comporte les étapes suivantes pour chaque pixel.

- on porte le corps noir 251 à une première température T°1 au moyen du cryostat 254 et on forme une première image de ce corps noir sur le détecteur 22 à travers le dôme 21 et l'optique 24 de l'autodirecteur,
- on porte le corps noir à une deuxième température T°2 au moyen du cryostat et on forme une deuxième image de ce corps noir sur le détecteur à travers le dôme et l'optique de l'autodirecteur, ces températures T°1 et T°2 dépendant du temps d'intégation ti mais pas d'une température estimée du dôme comme c'est le cas dans l'art antérieur,
- on calcule l'offset et le gain à partir des écarts mesurés pour chaque pixel entre les deux images, et on les met en mémoire.

Ces étapes sont réitérées pour chaque autre temps d'intégration ti, avec d'autres première et deuxième températures. Ces températures sont prédéterminées en fonction des températures prévues pour la scène.

Pour réduire la durée de la calibration, on peut prendre comme première température, la deuxième température utilisée pour le calcul effectué pour le temps d'intégration précédent, et ainsi éviter le changement de température du corps noir entre la deuxième image du temps d'intégration précédent et la première image du temps d'intégration considéré. Ceci est illustré dans le tableau ci-dessous pour quatre temps d'intégration ti1, ti2, ti3, ti4 et cinq températures T1°, T2°, T3°, T4°, T5°. Pour le calcul des coefficients au temps d'intégration ti1, T2° est la deuxième température utilisée pour la deuxième image « image 1-2 » et est également utilisée pour la première image « image 2-2 » du calcul au temps d'intégration ti2 ; etc.

|  | ti1 | ti2 | ti3 | ti4 |
|---|---|---|---|---|
| T1° | Image 1-1 |  |  |  |
| T2° | Image 1-2 | Image 2-2 |  |  |
| T3° |  | Image 2-3 | Image 3-3 |  |
| T4° |  |  | Image 3-4 | Image 4-4 |
| T5° |  |  |  | Image 4-5 |

Une fois les coefficients calculés pour chaque pixel et pour chaque temps d'intégration envisagé, le dispositif de calibration 25' est éjecté avec la coiffe 10. Il n'est pas nécessaire de retourner l'ensemble détecteur et son optique pour passer en phase opérationnelle.

Dans le domaine des fusées ou des missiles haute altitude (> 30 km), le flux apporté par la scène est très faible car il correspond au fond de ciel. Le flux principal correspond à l'échauffement aérodynamique du dôme pendant le vol. Le flux apporté par le dispositif de calibration doit, dans ce cas, être représentatif de l'échauffement additionnel du dôme après décoiffage ajouté à celui, très faible, de la scène.

Le flux devant être apporté par le dispositif de calibration étant faible, celui-ci aura des consignes de température faibles pour le corps noir (comprise entre 100 K et 300 K). La contribution de la fenêtre ou du dôme n'a pas à être estimée, contrairement au cas correspondant aux figures 1 où le dôme n'est pas sur le trajet optique de formation de l'image du corps noir sur le détecteur.

Le procédé a été simulé avec 4 temps d'intégration et avec T1°=256 K, T2°=284 K, T3°=305 K, T4°=327 K, T°5=366 K. L'augmentation de température entre chaque palier correspond à une augmentation d'environ 25 K du dôme pour chaque temps d'integration. Grâce à une variation rapide de la température obtenue par l'utilisation du refroidisseur de type Joule-Thomson et du nombre limité de changement de températures, cette calibration dure moins de 30 secondes.

Ce procédé de calibration peut notamment s'implémenter à partir d'un produit programme d'ordinateur, ce programme d'ordinateur comprenant des instructions de code permettant d'effectuer les étapes du procédé de calibration. Il est enregistré sur un support lisible par ordinateur, comme par exemple un ordinateur également utilisé pour synchroniser l'enregistrement des images avec la température captée à proximité du corps noir et éventuellement les différents temps d'intégration. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

**Revendications**

**1.** Pointe avant (100') d'aéronef comprenant :

- une coiffe éjectable (10),
- un autodirecteur (20) équipé d'un détecteur infrarouge, IR, (22), d'un dôme (21) et d'une optique (24) apte à former une image d'une scène sur le détecteur IR placé dans le plan focal (23) de l'optique (24),
- un dispositif de calibration (25') équipé d'une référence de température (251) et d'une optique (253) apte à diriger le rayonnement émis par la référence de température,

**caractérisée en ce que** le dispositif de calibration (25') est placé en dehors de l'autodirecteur (20), en amont de celui-ci de manière à ce que l'optique de calibration (253) soit apte à former une image de la référence de température (251) sur le détecteur (22) à travers le dôme (21) et l'optique (24) de l'autodirecteur, et **en ce que** ce dispositif de calibration (25') est éjectable avec la coiffe (10).

**2.** Pointe avant d'aéronef selon la revendication précédente, **caractérisée en ce que** le dispositif de calibration comporte en outre un cryostat (254) dans lequel est située la référence de température (251) et comprenant un refroidisseur apte à porter la température de la référence à une température prédéterminée.

3. Pointe avant d'aéronef selon la revendication précédente, **caractérisée en ce que** le refroidisseur est à circuit ouvert et associé à un réservoir de gaz pressurisé.

4. Pointe avant d'aéronef selon l'une des revendications précédentes, **caractérisée en ce que** l'ensemble optique de l'autodirecteur et détecteur (22,24) est monté sur un dispositif de rotation (27) ayant une amplitude de rotation inférieure à 90°.

5. Pointe avant d'aéronef selon l'une des revendications précédentes, **caractérisée en ce que** l'aéronef est une fusée ou un missile.

6. Procédé de calibration du détecteur de l'autodirecteur (20) d'une pointe avant (100') d'aéronef selon l'une des revendications précédentes et dont la référence de température est un corps noir (251), **caractérisé en ce qu'**une image comportant des pixels, et le détecteur (22) comportant au moins un temps d'intégration ti, il comprend les étapes suivantes de :

- calcul d'un offset et d'un gain pour chaque pixel pour un temps d'intégration $t_i$ du détecteur, à partir d'une image du corps noir à une première température T1 °, puis d'une image à une deuxième température T2°, ces images étant formées sur le détecteur à travers le dôme (21) et l'optique (24) de l'autodirecteur, et ces températures T1 ° et T2° dépendant du temps d'intégation ti mais pas d'une température estimée du dôme,
- mise en mémoire de l'offset et du gain calculés,
- lorsqu'il y a plusieurs temps d'intégration, réitération de ces étapes de calcul et de mise en mémoire d'un offset et d'un gain pour chaque autre temps d'intégration $t_i$ du détecteur avec des températures T1 ° et T2° différentes,
- éjection du dispositif de calibration (25').

7. Procédé de calibration selon la revendication précédente, **caractérisé en ce que** lorsqu'il y a plusieurs temps d'intégration, la deuxième température utilisée pour temps d'intégration précédent, est la première température du temps d'intégration suivant.

8. Procédé de calibration selon l'une des revendications 6 ou 7, **caractérisé en ce qu'**au moins une des première ou deuxième températures est comprise entre 100 K et 300 K.

9. Procédé de calibration selon l'une des revendications 6 à 8, **caractérisé en ce qu'**il est réalisé avec 4 temps d'intégration.

10. Un produit programme d'ordinateur, ledit programme d'ordinateur comprenant des instructions de code permettant d'effectuer les étapes du procédé selon l'une quelconque des revendications 6 à 9, lorsque ledit programme est exécuté sur un ordinateur.

**Patentansprüche**

1. Flugkörpernasenkonus (100'), der Folgendes umfasst:

- einen abstoßbaren Deckel (10),
- eine Selbstlenkanlage (20), die mit einem Infrarotdetektor IR (22), einer Kuppel (21) und einer Optik (24) zum Erzeugen eines Bildes einer Szene auf dem IR-Detektor ausgestattet ist, der in der Brennebene (23) der Optik (24) platziert ist,
- eine Kalibrationsvorrichtung (25'), die mit einem Temperaturreferenzgerät (251) und einer Optik (253) zum Leiten der von dem Temperaturreferenzgerät emittierten Strahlung ausgestattet ist,

**dadurch gekennzeichnet, dass** die Kalibrationsvorrichtung (25') außerhalb der Selbstlenkanlage (20) oberhalb der Letzteren auf eine solche Weise platziert ist, dass die Kalibrationsoptik (253) ein Bild des Temperaturreferenzgeräts (251) auf dem Detektor (22) durch die Kuppel (21) und die Optik (24) der Selbstlenkanlage bilden kann, und dadurch, dass diese Kalibrationsvorrichtung (25') mit dem Deckel (10) abgestoßen werden kann.

**2.** Flugkörpernasenkonus nach dem vorherigen Anspruch, **dadurch gekennzeichnet, dass** die Kalibrationsvorrichtung ferner einen Kryostat (254) umfasst, in dem sich das Temperaturreferenzgerät (251) befindet und der einen Kühler umfasst, der in der Lage ist, die Temperatur des Referenzgeräts auf eine vorbestimmte Temperatur zu bringen.

**3.** Flugkörpernasenkonus nach dem vorherigen Anspruch, **dadurch gekennzeichnet, dass** der Kühler einen offenen Kreislauf hat und mit einem Druckgasreservoir assoziiert ist.

**4.** Flugkörpernasenkonus nach einem der vorherigen Ansprüche, **dadurch gekennzeichnet, dass** die optische Baugruppe der Selbstlenkanlage und des Detektors (22, 24) an einer Drehvorrichtung (27) mit einer Drehamplitude von weniger als 90° montiert ist.

**5.** Flugkörpernasenkonus nach einem der vorherigen Ansprüche, **dadurch gekennzeichnet, dass** der Flugkörper eine Rakete oder ein Geschoss ist.

**6.** Verfahren zum Kalibrieren des Detektors der Selbstlenkanlage (20) eines Flugkörpernasenkonus (100') nach einem der vorherigen Ansprüche, dessen Temperaturreferenzgerät ein schwarzer Körper (251) ist, **dadurch gekennzeichnet, dass** es, da ein Bild Pixel umfasst und der Detektor (22) wenigstens eine Integrationszeit ti umfasst, die folgenden Schritte beinhaltet:

- Berechnen eines Versatzes und eines Gewinns für jedes Pixel für eine Integrationszeit $t_i$ des Detektors auf der Basis eines Bildes des schwarzen Körpers mit einer ersten Temperatur T1°, dann eines Bildes mit einer zweiten Temperatur T2°, wobei diese Bilder auf dem Detektor durch die Kuppel (21) und die Optik (24) der Selbstlenkanlage gebildet werden, und wobei diese Temperaturen T1° und T2° von der Integrationszeit ti, aber nicht von einer geschätzten Temperatur der Kuppel abhängig sind,
- Speichern der berechneten Werte für den Versatz und den Gewinn,
- Wiederholen, wenn es mehrere Integrationszeiten gibt, dieser Schritte des Berechnens und Speicherns eines Versatzes und eines Gewinns für jede andere Integrationszeit $t_i$ des Detektors mit unterschiedlichen Temperaturen T1° und T2°,
- Auswerfen der Kalibrationsvorrichtung (25').

**7.** Kalibrationsverfahren nach dem vorherigen Anspruch, **dadurch gekennzeichnet, dass**, wenn es mehrere Integrationszeiten gibt, die für die vorherige Integrationszeit benutzte zweite Temperatur die erste Temperatur der nachfolgenden Integrationszeit ist.

**8.** Kalibrationsverfahren nach einem der Ansprüche 6 oder 7, **dadurch gekennzeichnet, dass** mindestens eine der ersten oder zweiten Temperatur zwischen 100° K und 300° K liegt.

**9.** Kalibrationsverfahren nach einem der Ansprüche 6 bis 8, **dadurch gekennzeichnet, dass** es mit vier Integrationszeiten realisiert wird.

**10.** Computerprogrammprodukt, wobei das Computerprogramm Code-Befehle umfasst, die die Ausführung der Schritte des Verfahrens nach einem der Ansprüche 6 bis 9 ermöglichen, wenn das Programm auf einem Computer ausgeführt wird.

**Claims**

**1.** An aircraft nose cone (100') comprising:

- an ejectable cap (10),
- a homing head (20) provided with an infrared, IR, detector (22), a dome (21) and an optical system (24) capable of forming an image of a scene on the IR detector placed in the focal plane (23) of the optical system (24),
- a calibration device (25') provided with a temperature reference (251) and an optical system (253) capable of directing the radiation emitted by the temperature reference,

**characterised in that** the calibration device (25') is placed outside of the homing head (20), upstream therefrom such that the calibration optical system (253) is capable of forming an image of the temperature reference (251) on the detector (22) through the dome (21) and the optical system (24) of the homing head, and **in that** this calibration device (25') can be ejected with the cap (10).

2.  The aircraft nose cone according to the preceding claim, **characterised in that** the calibration device further comprises a cryostat (254) in which is located the temperature reference (251) and comprising a cooler capable of bringing the reference temperature to a predetermined temperature.

3.  The aircraft nose cone according to the preceding claim, **characterised in that** the cooler has an open circuit and is associated with a pressurised gas tank.

4.  The aircraft nose cone according to any of the preceding claims, **characterised in that** the optical system assembly of the homing head and the detector (22, 24) is mounted on a rotation device (27) that has a rotation amplitude of less than 90°.

5.  The aircraft nose cone according to any of the preceding claims, **characterised in that** the aircraft is a rocket or a missile.

6.  A method for calibrating the detector of the homing head (20) of an aircraft nose cone (100') according to any of the preceding claims and the temperature reference of which is a black body (251), **characterised in that** since an image comprises pixels, and the detector (22) comprises at least one integration time ti, it comprises the following steps:

    - calculating an offset and a gain for each pixel for an integration time $t_i$ of the detector, based on an image of the black body at a first temperature T1°, then on an image at a second temperature T2°, these images being formed on the detector through the dome (21) and the optical system (24) of the homing head, and these temperatures T1° and T2° depending upon the integration time ti but not upon an estimated temperature of the dome,
    - storing the calculated offset and gain,
    - when there are a number of integration times, repetition of these calculation steps and storage of an offset and a gain for each other integration time $t_i$ of the detector with different temperatures T1° and T2°,
    - ejection of the calibration device (25').

7.  The calibration method according to the preceding claim, **characterised in that** when there are a number of integration times, the second temperature used for the previous integration time is the first temperature of the following integration time.

8.  The calibration method according to either of Claims 6 or 7, **characterised in that** at least one of the first or second temperatures is between 100 K and 300 K.

9.  The calibration method according to any of Claims 6 to 8, **characterised in that** it is realised with 4 integration times.

10. A computer programme product, said computer programme comprising code instructions that make it possible to perform the method steps according to any of Claims 6 to 9 when said programme is implemented on a computer.

FIG.1a

Rotation de 180° de
l'ensemble détecteur/optique

FIG.1b

EP 2 943 737 B1

Alignement possible de l'ensemble détecteur/optique

FIG.2a

Scène

Rotation < 90° de l'ensemble detecteur/optique

FIG.2b

**EP 2 943 737 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090250614 A1